# EUROPEAN PATENT SPECIFICATION

(11) **EP 2 134 631 B1**
(45) Date of publication and mention of the grant of the patent: **10.08.2011**
(21) Application number: 08736832.0
(22) Date of filing: 11.04.2008
(51) Int. Cl.: B65G 17/06, B65G 17/12, B65G 39/20

(54) **SIDE GUIDING PIECE**
SEITENFÜHRUNGSTEIL
ELEMENT DE GUIDAGE LATERAL

(30) Priority: 13.04.2007 FI 20075253
(43) Date of publication of application: 23.12.2009
(73) Proprietor: Metso Paper, Inc., 00130 Helsinki (FI)
(72) Inventor: MIELONEN, Eero, 15300 Lahti (FI)
(74) Representative: TBK
(86) International application number: PCT/FI2008/050183
(87) International publication number: WO 2008/125732

(56) References cited:
- DE-C- 605 511
- US-A- 3 842 970

## Description

The present invention relates to a side guiding piece according to the preamble of claim 1 for lateral guiding the chain of a lamellar chain conveyor or other wheel-supported chain conveyor.

A lamellar chain runs along an endless loop supported by wheels, whereby the load-bearing surface of the lamellar chain faces upwards on the transport travel and the chain returns to the beginning of the conveyor upside down underneath the conveyor. On the transport travel the chain is supported by a support rail and its wheels and support surface carry the load placed on the conveyor. On the return side the chain can hang freely or it can be supported by the chain wheels. The design of the chain can vary a lot depending on the purpose. In one exemplary design the body of the chain is formed by an inner and an outer side plate between which there is an axle pair structure. These form the links of the chain. The next link is connected to the leading axle structure and the previous link is connected to the trailing axle structure so that each axle structure is always common for two links and a side plate pair. Thus the side plate/axle design structurally corresponds to a roller chain used in power transmission. A lamellar conveyor additionally requires lamellae forming the load-bearing surfaces, the lamellae being attached to the side plates, and running wheels arranged at the end of axle structures on the side of the chain.

The running wheels run supported by the running rail on the travel of the conveyor. The rail only supports the mass of the chain and the load but does not laterally guide the chain. For lateral guiding the chain runs between the side frame plates simultaneously acting as lateral guide surfaces. The contact with guide surfaces is formed by different lateral guide pieces. The lateral guide pieces can be fastened with screws to the axle structures of the conveyor chain or a plastic plate having a length of nearly the conveyor can be fastened with screws as well to the side body plates of the conveyor.

A disadvantage of the above-mentioned solutions is that installing them with screws is time-consuming and thus expensive. The body of the conveyor must also be provided with threaded holes for this purpose only, which increases the cost of the conveyor. Service and replacement work is also slow and expensive because of the screw attachment. Especially when using a full-length plastic plate or the like guide the replacement is expensive, as the whole plate must be replaced at the same time.

The aim of the present invention is to produce a side guiding piece by means of which the chain can be laterally guided easier than before.

According to one feature the aim is to produce a side guiding piece that can be easily fastened and, if necessary, replaced, preferably even without tools.

Further, the aim of one feature of the invention is to produce a side guiding piece that can easily be produced in mass production.

According to yet another feature of the invention the aim is to produce a side guiding piece that is independently attached to the conveyor chain.

The invention is based on the side guiding piece having means for attaching it form-lockingly to the chain of the lamellar chain conveyor.

According to one embodiment of the invention a bracket extending at least behind one wheel of the conveyor wheel and support means supported by the axle structure of at least one wheel are formed on the side guiding piece.

According to one preferred embodiment one lateral guide piece comprises support means supported by at least two consecutive axle structures.

More specifically, the lateral guide piece according to the invention is characterized by what is disclosed in the characterizing part of claim 1.

Considerable advantages are achieved by means of the invention.

The side guiding pieces according to the invention are very easy to install and remove without tools. They can be produced from a preferred material by means of, for example, pressure injection moulding. Suitable materials include materials with a reasonable wear resistance, sufficient strength and low friction coefficient, such as polyamides. The shape is simple and thus easy to produce by means of many methods suitable for mass production. A relatively low number of guide pieces are enough for the length of the conveyor whereby the manufacture and maintenance costs are kept low. The same piece will fit conveyors of all lengths and it is necessary to only vary the number of the guide pieces. No fastening means are necessary in the conveyor for the side guiding pieces, whereby its structure is simplified as well. The side guiding pieces according to the invention can also by installed to conveyors already in use. The same guide pieces will also take care of guiding the return side.

In the following, the invention is disclosed in more detail by means of reference to the appended drawings.

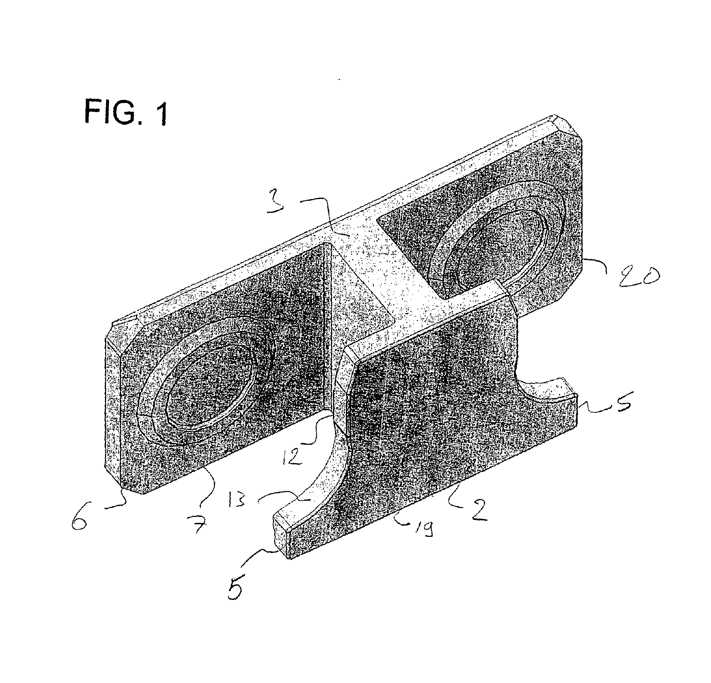

Figure 1 illustrates one side guiding piece according to the invention seen from the side of the fastening means.

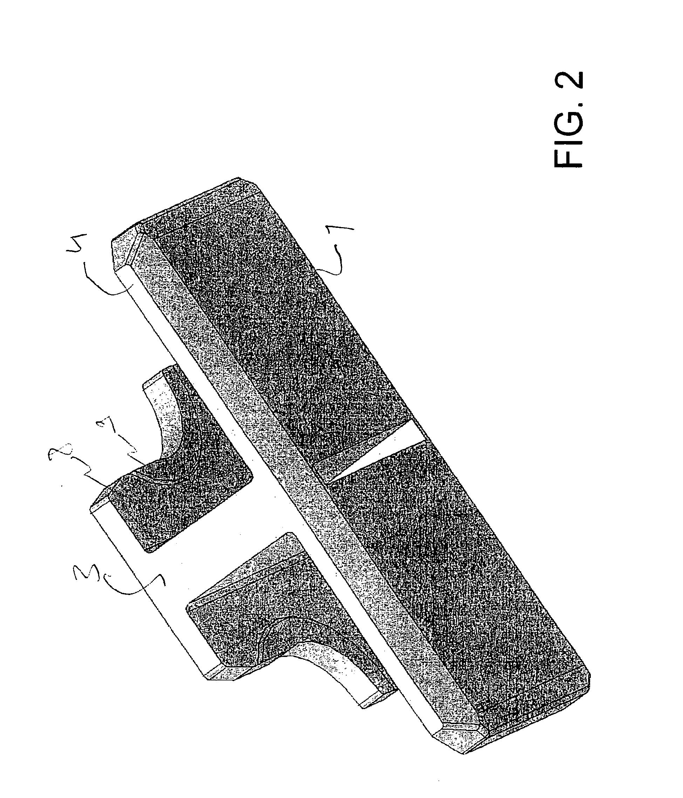

Figure 2 illustrates one side guiding piece according to the invention seen from the side of the guide surface.
Figure 3 illustrates the side guiding piece of figures 1 and 2 attached to the conveyor belt.

In the above-mentioned figures the shown side guiding piece is meant for connection with a wheel pair (two wheels one after the other). The side guiding piece is I-shaped. The foot part 2 of the letter comprises two brackets 5 extending laterally from the body 3 of the letter. The body 3 forms a distance for the transverse branches 4 of the letter. The surface facing away from the body of the branches 3 forms a guide surface 1.

The fastening means of the side guiding piece comprise brackets 5, the rear part 6 of the guide surface and the circular support member 7 formed thereon. The circular support member 7 comprises a circumference of a circle having an inner edge and an outer edge and a mating surface 20 inside the circumference. A second support member 9 comprising a corresponding arc of a circle is located on the inner surface 8 of the brackets 5. The distance between the rear part 6 of the guide surface and the inner surface 8 of the brackets 5 is dimensioned to be slightly larger than the width of the wheels 10 of the conveyor and the first support means 7 and the second support means 9 are dimensioned to extend so that they fit into the hub 11 of the wheels 10 and so that the wheel is allowed to rotate freely. Thus the wheel 10 fits between the rear part 6 of the guide surface and the inner surface 8 of the brackets 5 while the support means 7, 9, 12 and 13 guide and lock the lateral guide parts to the axle structure.

This embodiment also has a second locking mechanism. The brackets 5 include an arc section 13 dimensioned so that the distance between the arc sections 13 of the brackets is the same as the distance between the axle structures 14. A bulge 12 forms an extension of this arc section 13, the bulge forming with the opposite bulge an isthmus larger than the distance between the axle structures 14. When the axle structure 14 is aligned with the arc section 13, the bulges 12 prevent the loosening of the lateral guide part from the chain.

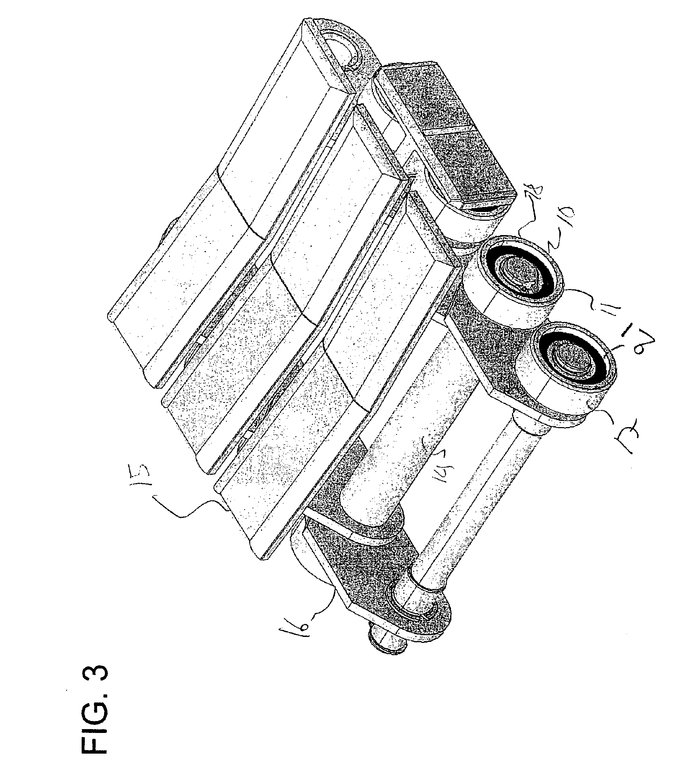

In figure 3 the lamella side 15 of the chain is considered the upper side. The lamellar chain described here as an example comprises side plates 16 forming the body of the chain with an axle structure pair formed by axle structures 14 therebetween. These form one link of the chain. The next link is connected to the leading axle structure and the trailing link is connected to the trailing axle structure so that each axle structure 14 is always common for two links and a side plate pair 16. The lamellae 15 are fastened to the upper surfaces of the side plates 16. Wheels 10 are arranged outside the side plates 16 in the ends of the axle structures 14, the wheels having a rolling surface 17 and a hub enclosed inside the edges 18.

The lateral guide according to the invention is installed in the conveyor by pushing it between the wheels 10 from a direction opposite to the lamellae of the conveyor. The foot part 2 with its brackets 5 is narrower on its one side and thus it can be directed to between the axle structures 14 of the conveyor. The bulges 12 of the brackets offer resistance to pushing the lateral guide part between the axle structures 14, but they are elastic so that the piece can be installed without tools or using much force. When the bulges 12 of the foot part have passed the axle structures 14, the lateral guide piece is locked between the axle structures. Correspondingly, the first support member 7 on the inner surface 6 of the guide surface 1 and the second support member 9 of the inner surface 8 of the bracket extend past the edge 18 of the rolling surface 17 and lock the lateral guide piece 14 in place while, however, allowing rotation of the wheel 10. The support surfaces 9 of the brackets 5 are supported by the inner circumference and the inner part 21 of the running wheels and prevent the running wheels from contacting the inner surface 8 of the brackets.

The side guiding piece comprises surfaces receiving guide forces and positioning the piece. The piece is positioned by surfaces 7, 9, 12 and 13 of which 7 and 9 position the piece in relation to the running wheel 10, the surface 12 locks the piece in place and the surfaces 13 position in relation to the consecutive axle structures. These surfaces 7, 9, 12 and 13 keep the lateral guide piece in correct place and in correct position in the lamellar chain of the conveyor. The lateral guiding forces are exerted on the guide surface 1 and are transmitted to the conveyor chain via the lateral guide piece. A mating surface 20 remains inside the support member 7 located in the rear part 6 of the guide surface 1, the mating surface being supported by the end of the axle structure 14. The thickness of the foot part 2 is arranged so that the foot part 2 is supported by the side plates of the chain, whereby the wheels 10 do not have to receive the forces generated during lateral guiding and they are allowed to rotate freely. Thus, surfaces receiving forces are the guide surface 1, mating surfaces 20 and the rear surface of the foot part 2.

Pieces are installed as described above at certain intervals on the conveyor chain, such as with an interval of 0.7 to 2 metres, on both sides of the chain. The sliding pieces installed on both sides of the chain can be installed non-aligned or staggered in relation to each other.

In addition to the above the present invention has other embodiments as well.

The support means can be, e.g. studs and clips arranged as an arc of a circle instead of arcs. The shape of the outer edge of the support means is, however, preferably arranged to correspond with the shape of the wheels. In principle, fastening means attaching only to one side of the wheel, either on the outer or inner hub of the wheel, could be sufficient, but this can increase the movement of the lateral guide piece. The lateral guide piece can be formed as a U-shape, but in this case it preferably comprises a stopper supported by the side plate or the lamella for preventing rotation. The guide piece must not be allowed to end up between he wheel and the track or the wheel and the lamella. The guide surface can also by coated with a hard-wearing and/or low-friction material, if necessary. The surface can also be formed so as to be separately replaceable, but as the replacement of the whole lateral guide piece is easy, there most probably is no need for this. In the described example the rolling surface 17 of the wheel is wider than its hub part 21. The wheel can also be such in which the hub is wider and it extends outside the edges of the rolling surface. The wheel can also be evenly wide. In this case the support means guided by the wheel are dimensioned case by case.

The form-locking attachment according to the invention can also be carried out by shaping the side guiding piece otherwise than as described in the above. It is essential that the locking is based on the shape of the actual lateral guide piece and no separate attachment means are needed for the locking. The guide piece can, for example, be formed of two pieces locking into each other by form-locking quick attachment and they simultaneously form an attachment to the chain of the chain conveyor and position the piece in the correct place.

## Claims

1. A side guiding piece for a lamellar chain, the piece comprising
- a body (3), and
- a guide surface (1) transverse to the body (3),
- means (7, 9, 12, 13, 20) for attaching the lateral guide piece form-lockingly into the lamellar chain by the own form of the guide piece,
- at least one first branch (4) extending from the body (3) with a rear part (6) and
- at least one second branch (5) extending from the body (3) in the same direction as the first branch (4), the second branch having an inner surface (8) pointing towards the rear part (6),
- at least one support means (7, 9, 20) formed in the rear part (6) or the inner side (8) for supporting the lamellar chain to the wheel (10) and for positioning the lateral guide piece.

2. A side guiding piece according to claim 1, **characterized by**
at least one first support means (7, 20) formed in the rear part (6), and
at least one second support means (9) formed in the inner surface.

3. A side guiding piece according to any of the above claims, **characterized in that** the side guiding piece is dimensioned so that
- the distance between the rear part (6) and the inner part (8) is larger than the wheel width of the conveyor for which the lateral guide piece is meant, and
- the distance between the first support means (7) of the rear part (6) and the inner surface of the second support means (9) is smaller than the width of the running wheel of the chain.

4. A side guiding piece according to claim 1 or 2, **characterized in that** the side guiding piece is dimensioned so that
- the distance between the rear part (6) and the inner part (8) is larger than the wheel width of the conveyor for which the lateral guide piece is meant, and
- the distance between the first support means (7) of the rear part (6) and the inner surface (8) of the second support means (9) is larger than the width of the running wheel of the chain.

5. A side guiding piece according to any of the above claims, **characterized in that** the shape of the outer edge of the support means (7, 9) is arranged so as to suit the shape of the edges (18) of the rolling surfaces (17) of the wheels (10) used in the conveyor.

6. A side guiding piece according to any of the above claims, **characterized in that** the support means (7, 9) are formed by arcs of circle.

7. A side guiding piece according to any of the above claims, **characterized in that** the number of first (4) and second (5) branches is two and that they form an I-shape with the body and the lateral guide plate comprises support means for two wheels (10) and the axle structure (14).

8. A side guiding piece according to claim 7, **characterized in that** the second branches (5) form a foot part (2) having brackets (5), the brackets comprising arc parts (13) extending outwards and that the distance between the arc parts is smaller than or equal to the distance between the outer surface of the axle structures and the end of each arc part comprises a bulge (12) and the distance between the outer surfaces of the bulges (12) is larger than the distance between the outer surfaces of the axle structures.

## Patentansprüche

1. Seitenführungsteil für eine Lamellenkette, wobei das Teil aufweist
- einen Körper (3) und
- eine Führungsfläche (1), die quer zu dem Körper (3) liegt,
- eine Einrichtung (7, 9, 12, 13, 20) zum formflüssigen Anbringen des quer liegenden Führungsteils in die Lamellenkette durch die eigene Form des Führungsteils,
- zumindest einen ersten Abzweig (4), der sich von dem Körper (3) erstreckt, mit einem hinteren Abschnitt (6), und
- zumindest einem zweiten Abzweig (5), der sich von dem Körper (3) in derselben Richtung wie der erste Abzweig (4) erstreckt, wobei der zweite Abzweig eine innere Fläche (8) hat, die zu dem hinteren Abschnitt (6) weist,
- zumindest eine Stützeinrichtung (7, 9, 20), die in dem hinteren Abschnitt (6) oder der inneren Seite (8) zum Stützen der Lamellenkette an dem Rad (10) und zum Positionieren des quer liegenden Führungsteils ausgebildet ist.

2. Seitenführungsteil gemäß Anspruch 1, **gekennzeichnet durch**
zumindest eine erste Stützeinrichtung (7, 20), die in dem hinteren Abschnitt (6) ausgebildet ist, und
zumindest eine zweite Stützeinrichtung (9), die in der inneren Fläche ausgebildet ist.

3. Seitenführungsteil gemäß einem der vorhergehenden Ansprüche, **dadurch gekennzeichnet, dass** das Seitenführungsteil so dimensioniert ist, dass
- der Abstand zwischen dem hinteren Abschnitt (6) und dem inneren Abschnitt (8) größer als die Radbreite des Förderers ist, für den das quer liegende Führungsteil gedacht ist, und
- der Abstand zwischen der ersten Stützeinrichtung (7) des hinteren Abschnitts (6) und der inneren Fläche der zweiten Stützeinrichtung (9) kleiner als die Breite des Laufrads der Kette ist.

4. Seitenführungsteil gemäß Anspruch 1 oder 2, **dadurch gekennzeichnet, dass** das Seitenführungsteil so dimensioniert ist, dass
- der Abstand zwischen dem hinteren Abschnitt (6) und dem inneren Abschnitt (8) größer als die Radbreite des Förderers ist, für den das quer liegende Führungsteil gedacht ist, und
- der Abstand zwischen der ersten Stützeinrichtung (7) des hinteren Abschnitts (6) und der inneren Fläche (8) der zweiten Stützeinrichtung (9) größer als die Breite des Laufrads der Kette ist.

5. Seitenführungsteil gemäß einem der vorhergehenden Ansprüche, **dadurch gekennzeichnet, dass** die Gestalt des äußeren Rands der Stützeinrichtung (7, 9) so angeordnet ist, dass diese an die Gestalt der Ränder (18) der Rollflächen (17) der Räder (10) passt, die bei dem Förderer verwendet werden.

6. Seitenführungsteil gemäß einem der vorhergehenden Ansprüche, **dadurch gekennzeichnet, dass** die Stützeinrichtung (7, 9) aus Kreisbögen ausgebildet ist.

7. Seitenführungsteil gemäß einem der vorhergehenden Ansprüche, **dadurch gekennzeichnet, dass** die Anzahl der ersten (4) und der zweiten (5) Abzweige zwei beträgt und dass diese eine I-Form mit dem Körper ausbilden und die quer liegende Führungsplatte eine Stützeinrichtung für zwei Räder (10) und den Achsenaufbau (14) aufweist.

8. Seitenführungsteil gemäß Anspruch 7, **dadurch gekennzeichnet, dass** die zweiten Abzweige (5) einen Fußabschnitt (2) ausbilden, die Träger (5) haben, wobei die Träger Bogenabschnitte (13) aufweisen, die sich nach außen erstrecken, und dass der Abstand zwischen den Bogenabschnitten kleiner als oder gleich wie der Abstand zwischen der äußeren Fläche der Achsenstrukturen ist, und wobei das Ende von jedem Bogenabschnitt eine Wölbung (12) aufweist, und wobei der Abstand zwischen den äußeren Flächen der Wölbungen (12) größer als der Abstand zwischen den äußeren Flächen der Achsenstrukturen ist.

## Revendications

1. Pièce de guidage latéral pour une chaîne lamellaire, la pièce comprenant
- un corps (3), et
- une surface (1) de guidage transversale au corps (3),
- des moyens (7, 9, 12, 13, 20) destinés à fixer la pièce de guidage latéral par verrouillée de forme dans la chaîne lamellaire par la forme propre de la pièce de guidage,
- au moins une première branche (4) s'étendant du corps (3) avec une partie arrière (6) et
- au moins une deuxième branche (5) s'étendant du corps (3) dans la même direction que la première branche (4), la deuxième branche présentant une surface (8) intérieure pointant vers la partie arrière (6),
- au moins un moyen (7, 9, 20) de support formé dans la partie arrière (6) ou la surface (8) intérieure pour supporter la chaîne lamellaire à la roue (10) et pour positionner la pièce de guidage latéral.

2. Pièce de guidage latéral selon la revendication 1, **caractérisée par**
au moins un premier moyen (7, 20) de support formé dans la partie arrière (6), et
au moins un deuxième moyen (9) de support formé dans la surface intérieure.

3. Pièce de guidage latéral selon l'une quelconque des revendications précédentes, **caractérisée en ce que** la pièce de guidage latéral est dimensionnée de telle sorte que
- la distance entre la partie arrière (6) et la partie intérieure (8) soit supérieure à la largeur de la roue du convoyeur pour lequel la pièce de guidage latéral est destinée, et
- la distance entre le premier moyen (7) de support de la partie arrière (6) et la surface intérieure du deuxième moyen (9) de support soit inférieure à la largeur de la roue porteuse de la chaîne.

4. Pièce de guidage latéral selon les revendications 1 ou 2, **caractérisée en ce que** la pièce de guidage latéral est dimensionné de telle sorte que
- la distance entre la partie arrière (6) et la partie intérieure (8) soit supérieure à la largeur de la roue du convoyeur pour lequel la pièce de guidage latéral est destinée, et
- la distance entre le premier moyen (7) de support de la partie arrière (6) et la surface (8) intérieure du deuxième moyen (9) de support soit supérieure à la largeur de la roue porteuse de la chaîne.

5. Pièce de guidage latéral selon l'une quelconque des revendications précédentes, **caractérisée en ce que** la forme du bord extérieur du moyen (7, 9) de support est agencée de manière à s'adapter à la forme des bords (18) des surfaces (17) de roulement des roues (10) utilisées dans le convoyeur.

6. Pièce de guidage latéral selon l'une quelconque des revendications précédentes, **caractérisée en ce que** le moyen (7, 9) de support est formé par des arcs de cercle.

7. Pièce de guidage latéral selon l'une quelconque des revendications précédentes, **caractérisée en ce que** le nombre de première (4) et deuxième (5) branches est de deux et qu'elles forment un I avec le corps et la plaque de guidage latéral comprend des moyens de support pour deux roues (10) et la structure (14) d'essieu.

8. Pièce de guidage latéral selon la revendication 7, **caractérisée en ce que** la deuxième (5) branche forme une partie de pied (2) ayant des supports (5), les supports comportant des parties (13) d'arc s'étendant vers l'extérieur et que la distance entre les parties d'arc est inférieure ou égale à la distance entre les surfaces extérieures des structures d'essieu et que l'extrémité de chaque partie d'arc comprend une bosse (12) et que la distance entre les surfaces extérieures des bosses (12) est supérieure à la distance entre les surfaces extérieures des structures d'essieu.
